# EUROPÄISCHE PATENTSCHRIFT

(11) **EP 4 035 855 B1**
(45) Veröffentlichungstag und Bekanntmachung des Hinweises auf die Patenterteilung: **19.08.2026**
(21) Anmeldenummer: 21154104.0
(22) Anmeldetag: 28.01.2021
(51) Int. Cl.: B27N 3/00, B29C 44/18, B27N 3/02, B27N 3/18, B27N 7/00, B29C 70/68, B29C 70/72, B29C 70/74, B29C 44/36, B29K 75/00, B27N 5/02

(54) **VERFAHREN ZUM AUSSCHÄUMEN VON RÖHRENSPANPLATTEN SOWIE EINE RÖHRENSPANPLATTE**
A CHIPBOARD PENETRATED WITH TUBES AND METHOD FOR FOAMING CHIPBOARDS PENETRATED WITH TUBES
PANNEAU D'AGGLOMÉRÉ PÉNÉTRÉ PAR DES TUBES ET MÉTHODE DE MOUSSAGE DE PANNEAUX D'AGGLOMÉRÉ PÉNÉTRÉS PAR DES TUBES

(43) Veröffentlichungstag der Anmeldung: 03.08.2022
(73) Patentinhaber: Sauerländer Spanplatten GmbH & Co. KG, 59821 Arnsberg (DE)
(72) Erfinder: HEIM, Sebastian, 99867 Gotha (DE); DONATH, Steffen, 99867 Gotha (DE); KLOESER, Lars, 59757 Arnsberg (DE)
(74) Vertreter: Kalkoff & Partner Patentanwälte mbB

(56) Entgegenhaltungen:
- EP-A1- 1 545 855
- EP-A2- 0 141 368
- EP-B1- 0 141 368
- EP-B1- 1 545 855
- WO-A2-2010/079203

## Beschreibung

Die Erfindung betrifft ein Verfahren zum Ausschäumen von Röhrenspanplatten, sowie eine Röhrenspanplatte mit mindestens abschnittsweise ausgeschäumten Röhren.

Röhrenspanplatten mit einer verfüllten Röhre sind z.B. aus der DE 28 23 053 bekannt. Diese bestehen im Wesentlichen aus einer Mittelschicht von mit Bindemittel vermischten lignocellulosischen Partikeln, meist Holzspänen, welche in Balkenform stranggepresst und schließlich mit einer Außenschicht aus bspw. Naturholzbrettern abgedeckt werden. Es wird zudem offenbart, dass es möglich ist, einen durchgehenden Hohlraum in der Mittelschicht anzuordnen. Überdies wird die Möglichkeit aufgezeigt, diesen Hohlraum mit einem isolierenden Werkstoff auszufüllen oder auszuschäumen. Röhrenspanplatten ohne Außenschicht und ausgeschäumte Röhren werden z.B. bei der Herstellung von Wandelementen oder Türen, meist als Kern des Türblatts, verwendet. Dieser kann dann an den Sichtflächen mit Furnieren oder Dekorpapieren versehen werden, um bspw. eine natürliche Holzoptik darzustellen bzw. eine Holzmaserung zu imitieren.

Aus der EP 0 141 368 A2 ist weiter ein Türblatt aufweisend eine Röhrenspanplatte mit im Wesentlichen waagerechten Röhren bekannt. Das Türblatt soll besonders einbruchsicher und feuerfest ausgebildet sein. In mindestens einem Teil der Röhren sind daher Metallstäbe eingelassen. Die Metallstäbe weisen einen geringeren Durchmesser auf als die Röhren selbst. Es wird daher gelehrt, den verbleibenden Hohlraum jeder Röhre mit einem Material auszufüllen, welches feuerhemmende Eigenschaften aufweist In dem Zusammenhang kann das feuerhemmende Mittel als ein bei Hitzeeinwirkung aufschäumendes Material ausgebildet sein. Überdies sollen die Röhren an ihren offenen Enden mittels eines das Türblatt umlaufenden Metallrahmens verschlossen werden. Auf den Sichtflächen der Röhrenspanplatte werden jeweils Hartfaserschichten aufgebracht.

Röhrenspanplatten der bereits bekannten Art weisen im Bereich der Röhren eine geringe Wandstärke und damit eine geringe Festigkeit auf. Sind weiter bspw. Profile in der Oberfläche der Röhrenspanplatte, z. B. für Landhaustürblätter oder die Röhrenspanplatte durchsetzende Ausschnitte zur Gestaltung eines Türblatts oder eines Wandelements vorgesehen, so kommt es mitunter zu Stabilitätsproblemen an der Oberfläche der Röhrenspanplatte oder im Randbereich eines solchen Ausschnitts. Der Ausschnitt schneidet dabei im Randbereich häufig durch eine oder mehrere Röhren, so dass dort konkav ausgebildete Hohlräume freigelegt oder Röhren angeschnitten werden. Die Wandabschnitte sind an diesem Randbereich nur dünn ausgebildet und entsprechend instabil. Gleiches gilt für die Profilierung der Oberfläche in den dünnen Wandabschnitten über einer Röhre. Daher sind solche Bearbeitungen einer Röhrenspanplatte bisher nicht wirtschaftlich möglich gewesen.

Der Erfindung liegt daher die Aufgabe zugrunde, ein Verfahren und eine Röhrenspanplatte vorzuschlagen, mit welchen auf kostengünstige Weise die Möglichkeit von Oberflächenbearbeitungen verbessert werden.

Die Erfindung löst die Aufgabe mit einem Verfahren nach Anspruch 1 und einer Röhrenspanplatte nach Anspruch 9. Die abhängigen Ansprüche beziehen sich auf vorteilhafte Ausführungsformen.

Das erfindungsgemäße Verfahren ist in Anspruch 1 definiert. In einem Schritt des erfindungsgemäßen Verfahrens wird eine Röhrenspanplatte bereitgestellt. Zur Erzeugung solcher Röhrenspanplatten sind dem Stand der Technik verschiedene Herstellungsverfahren, wie bspw. das Okal-Verfahren und/oder das Globiboard-Verfahren, zu entnehmen.

In einem weiteren Schritt folgt das Definieren eines oder mehrerer Bearbeitungsbereiche auf der Ober- und/oder Unterseite der Röhrenspanplatte. Im Rahmen der Erfindung wird unter dem Definieren eines Bearbeitungsbereichs verstanden, dass eine Festlegung eines Bereichs der Röhrenspanplatte stattfindet, in welchem eine Bearbeitung stattfinden soll. Eine solche Festlegung kann einerseits durch eine temporäre oberflächliche Markierung erfolgen, andererseits kann sich dies, ggf. auch zusätzlich zur vorgenannten Markierung, auf das Rüsten eines Betriebsmittels eines Arbeitssystems, bspw. einer Maschine oder eines anderen Werkzeugs, beziehen. Je nach Maschinenklasse kann unter dem Rüsten auch eine bspw. CNC-Programmierung verstanden werden. Die Bearbeitung kann dabei z.B. die Erzeugung einer Topologie bzw. Oberflächenprofils, eines dekorativen Musters oder eines Ausschnittes sein. Es ist im Rahmen der Erfindung zudem möglich, dass mehrere Bearbeitungsbereiche auf einer Röhrenspanplatte definiert werden, z. B. an verschiedenen Stellen der Ober- und/oder Unterseite. Es ist dem Anwender dabei frei, ob diese Bearbeitungsbereiche streng voneinander separiert sind oder sich möglicherweise sogar überlappen. Als Bearbeitung können insbesondere solche Verfahren verstanden werden, welche sich auf die Bearbeitung der Oberfläche, also der Ober- und/oder der Unterseite des Plattenkörpers beziehen. Solche Verfahren können z.B. spanabtragend sein, wie fräsen, hobeln, schleifen, feilen, schneiden oder sägen o.ä.

In einem weiteren Schritt sieht das erfindungsgemäße Verfahren vor, einen schaumbildenden Werkstoff in mindestens eine der vorgenannten Röhren im Bearbeitungsbereich zur lokalen Reduzierung des Dichteunterschieds zwischen Röhren und Plattenkörper einzubringen. Wurde also bspw. ein Bereich oberflächlich markiert, in welchem eine Bearbeitung stattfinden soll, so werden, erfindungsgemäß, in diesem Schritt sich in dem Bereich befindliche Röhren zumindest abschnittsweise mit dem schaumbildenden Werkstoff ausgeschäumt. Als solcher Werkstoff kommen insbesondere kleinporige Hartschäume in Frage, welche also gerade der Steigerung der Dichte und damit der Festigkeit des Plattenkörpers in den durch die Röhren geschwächten Bereichen dienen. Typische, für die Durchführung der Erfindung geeignete Schäume können einen Porendurchmesser von 150 µm bis 300 µm aufweisen. Die Dichte der Röhrenspanplatte wird durch das Einbringen von Schaum um 15 Gew.-% bis 35 Gew.-% bezogen auf die Röhrenspanplatte ohne Schaum gesteigert werden, wobei die Biegefestigkeit quer zur Plattenebene bei der im Bearbeitungsbereich mit schaumbildenden Werkstoff gefüllten Röhrenspanplatte um das mindestens das 2-fache höher liegt als die Ausgangsbiegefestigkeit der ungefüllten Röhrenspanplatte. Die Zugfestigkeit parallel zu den Röhren kann durch das Einfüllen von schaumbildendem Werkstoff auf mindestens das 4-fache gesteigert werden. Die Messung der mechanischen Eigenschaften erfolgt dabei jeweils gemäß EN 14755.

In einem weiteren Schritt erfolgt das Bearbeiten der Bearbeitungsbereiche. Hinsichtlich der vorgenannten Definition mehrerer separater Bearbeitungsbereiche ist es im Rahmen der Erfindung ebenfalls durchaus möglich, dass injedem Bearbeitungsbereich verschiedene Bearbeitungen oder sogar in einem Bearbeitungsbereich eine Kombination verschiedenartiger Bearbeitungen möglich sind. Dabei kann das Bearbeiten für sich genommen wiederum mehrere Teilschritte aufweisen um ein Bearbeitungsziel zu erreichen, z. B. das Herstellen eines Ausschnitts in Verbindung mit einem Profil in der Oberfläche der Röhrenspanplatte im Randbereich des Ausschnitts.

Das erfindungsgemäße Verfahren zum Ausschäumen von Röhrenspanplatten weist eine hohe Effizienz und Produktqualität auf. Das gezielte Einbringen von dichte- und damit festigkeitssteigerndem Schaum führt zu einer wesentlichen Erhöhung der Stabilität, insbesondere der Zug- und Biegefestigkeit des Produkts. Die verbesserte Stabilität führt dazu, dass nun eine Bearbeitung der Oberfläche einer Röhrenspanplatte bzw. das Einbringen eines Ausschnitts in eine Röhrenspanplatte auf einfache, wirtschaftliche Art möglich ist.

Eine Röhrenspanplatte kann aus einem Lager zur weiteren Bearbeitung gemäß des vorstehenden Verfahrens bereitgestellt werden. Die Röhrenspanplatte kann jedoch auch insbesondere unmittelbar im Anschluss einem kontinuierlich arbeitenden Herstellungsprozess entnommen werden. So ist es bspw. möglich, eine auf einem Ablängfeld abgelängte Röhrenspanplatte einem endlos arbeitenden Prozess zu entnehmen. Gemäß einer bevorzugten Ausführungsform, wurden die bereitgestellten Röhrenspanplatten zuvor in einem Strangpressverfahren erzeugt.

Bei einem solchen endlos arbeitenden Prozess werden z.B. Sägewerksresthölzer in Form von klassierten und vorbereiteten, mit Bindemittel beleimten lignocellulosehaltigen Materialien, insbesondere Holzspänen, in einen meist vertikalen Pressschacht mit seitlichen, beheizten Führungsplatten gestreut und in einem Stopftakt taktweise von einem Pressstempel verpresst, während die Röhrenspanplatte abwärts gedrückt bzw. gefördert wird. Im Zuge des Verpressens kann zusätzlich Wärme in das Pressgut eingetragen werden, so dass das Bindemittel aushärtet, und nach der Aushärtung das Gemisch von bspw. Holzspänen und Bindemittel dauerhaft miteinander verbunden ist. In dem Pressschacht können zudem zylindrische Stangen oder Dornen angeordnet sein, an welchen der Pressstempel einerseits geführt wird und welche andererseits für die Ausbildung der Röhren in dem Plattenkörper sorgen, so dass ein nachträgliches Aufbohren der Löcher entfallen kann. Die Ausrichtung der Spanflächen der Holzspäne ist bei einem solchen Stopfverfahren vorzugsweise quer zur Stopfrichtung.

Die Röhren im Plattenkörper gewähren insbesondere Vorteile hinsichtlich des Gewichts der entsprechenden Röhrenspanplatte. Zudem wird auch Rohmaterial eingespart. Nachteilig ist jedoch wie vorangehend dargestellt, dass insbesondere bei solchen Bearbeitungen der Röhrenspanplatte, bei welchem Material von der Ober- und/oder Unterseite abgetragen wird, Oberflächenabschnitte freigelegt bzw. erzeugt werden können, welche entweder nur noch dünnwandig von einer oder mehrerer Röhren getrennt sind, und/oder sogar zumindest eine Röhre teilweise schneiden und somit wie vorangehend beschrieben ein Hohlraum freigelegt wird. Je mehr Material bspw. von der Ober- und/oder der Unterseite im Zuge des Bearbeitens abgetragen wird, desto dünner wird der Abstand der Ober- und/oder Unterseite zu den Röhren. Die Bearbeitung schwächt also die Oberfläche des Plattenkörpers im Bearbeitungsbereich in Folge einer materialabtragenden Bearbeitung bzw. die Bearbeitung entfernt den Wandabschnitt über einer Röhre im Bearbeitungsbereich gänzlich. Dabei weist der Bearbeitungsbereich mit zunehmender materialabtragender Bearbeitung eine abnehmende Festigkeit auf. Die Platte ist dann abhängig vom Grad der Bearbeitung zunehmend bruchgefährdet. Zudem kann in einem dünnwandigen Wandabschnitt oft keine saubere Schnittkante erzeugt werden.

Geht bei der Bearbeitung am Wandabschnitt zu einer Röhre derart viel Material verloren, dass es zu einem Anschnitt oder sogar zu einem vollständigen Schnitt mit einer oder mehrerer Röhren kommt, so ist es vorteilhaft, dass zumindest die betroffenen Röhren im Bereich des Anschnitts zur Festigkeitssteigerung ausgeschäumt sind. Viele Formen der Bearbeitung, insbesondere solche, bei denen die Bearbeitung gleichmäßig im Bearbeitungsbereich stattfindet, bedingen solche Anschnitte bzw. vollständigen Schnitte im Wesentlichen im Randbereich des entsprechenden Bearbeitungsbereichs. Gemäß einer weiteren bevorzugten Ausführungsform wird daher der schaumbildende Werkstoff im Randbereich des Bearbeitungsbereichs in entsprechende Röhren eingebracht, ggf. ausschließlich im Randbereich des Bearbeitungsbereichs.

Im Zuge einer möglichen Form der Bearbeitung wird zwar Material abgetragen, jedoch dabei nicht so tief in den Plattenkörper eingegriffen, dass es unmittelbar zu einem Schnitt mit den Röhren kommt. Gemäß einer weiteren bevorzugten Ausführungsform wird in zumindest einem Bearbeitungsbereich im Zuge des Bearbeitens eine Topologie, insbesondere ein dekoratives Muster bzw. Profil, erzeugt. Eine solche Topologie kann bspw. durch Fräsen, Hobeln, Feilen, Sägen, Schneiden oder ein anderes spanabtragendes Verfahren erzeugt werden und sowohl maschinell als auch manuell. Es kommen insbesondere Verzierungen der Oberfläche, bspw. im Rahmen der Herstellung von Landhaustüren mit profilierter Oberfläche in Frage. Wie vorangehend erwähnt kann auch dabei das Problem auftreten, dass der Abstand einer Röhre als Hohlraum zur Ober- bzw. Unterseite so gering ist, dass der dünne Wandabschnitt in dem Bereich über der jeweiligen Röhre filigran und instabil verbleibt. Dies wurde vorangehend als Bereich mit geringer Druckfestigkeit beschrieben. Besonders bevorzugt werden hier die Röhren im gesamten Bearbeitungsbereich, also auch diejenigen, welche sich nicht im Randbereich befinden, ausgeschäumt, um der zu erzeugenden Topologie Stabilität zu bieten.

Röhrenspanplatten finden, wie vorangehend erwähnt, insbesondere Verwendung bei der Herstellung von Türen oder Wandelementen. Als Wandelemente kommen bspw. auch mobile Trennwände oder Wandelemente, insbesondere nicht-tragende Wandelemente im Innenausbau in Betracht. Dabei kann es, bspw. aus funktionalen und/oder ästhetischen Beweggründen, nötig sein Bau- oder Dekorteile in die spätere Tür oder das Wandelement, also in die Röhrenspanplatte einzusetzen. Gemäß einer weiteren bevorzugten Ausführungsform wird daher in zumindest einem Bearbeitungsbereich im Zuge des Bearbeitens ein Ausschnitt erzeugt, welcher Ober- und Unterseite des Plattenkörpers bzw. den Plattenkörper insgesamt durchtrennt. Der Randbereich des Ausschnitts kann bevorzugt mit dem Randbereich des Bearbeitungsbereichs übereinstimmen. Die Größe des Ausschnitts muss jedoch nicht zwingend mit der Größe des definierten Bearbeitungsbereichs übereinstimmen. Es können, wie vorangehend dargelegt, zudem weitere Bearbeitungen in demselben Bearbeitungsbereich, z.B. im Randbereich des Ausschnitts, durchgeführt werden. Solche weiteren Bearbeitungen können zusätzlich zu bspw. einem Ausschnitt das Erzeugen einer Dekoration oder eines Kantenprofils darstellen. Besonders bevorzugt werden in derartigen Bearbeitungsbereichen die Röhren zumindest im Randbereich des Ausschnitts abschnittsweise ausgeschäumt, so dass die Schwächung der Randbereiche durch die Röhren sowohl dimensional als auch statisch mindestens reduziert wird und bestenfalls beseitigt wird.

Ausschnitte in Röhrenspanplatten werden häufig für die Anordnung von Füllungen, z. B. von transparenten Sichtelementen oder von massiven Füllungen aus Holz, Metall, Keramik oder Kunststoff vorgesehen. Als zuvor angesprochenes Sichtelement kommen verschiedene transparente Bauteile in Betracht, wie z.B. rechteckige Fenster oder auch Rundfenster wie bspw. Bullaugen. Zudem können auch teil- oder intransparente Glasbauteile in die Ausschnitte eingebaut werden, wie bspw. Einsätze aus Milchglas, welche eher licht- als blickdurchlässig sind und zudem eine dekorative Funktion einnehmen. Um diese in dem zuvor erzeugten Ausschnitt einzufassen wird gemäß einer weiteren bevorzugten Ausführungsform im Randbereich der Ausschnitte ein Rahmen angeordnet. Eine solcher Rahmen dient insbesondere dem Zweck, eine in dem Ausschnitt anzuordnende Füllung zu halten bzw. befestigen zu können. Der Rahmen steht bevorzugt zumindest abschnittsweise in Wirkverbindung mit einem ausgeschäumten Anteil einer Röhre. Der Rahmen besteht oft aus Leisten und kann zumindest an diesen Stellen in der Röhrenspanplatte angeklebt oder mit anderen herkömmlichen Verbindungsmitteln befestigt sein. Insbesondere kann der Rahmen mit Stiften (bspw. hölzerne Stifte oder Metallstifte) an dem Plattenkörper bzw. der ausgeschäumten Röhre im Randbereich des Ausschnitts angeheftet sein. Es wird aber auch deutlich, dass der Rahmen ggf. nur aus einem Dichtmittel, einer Dichtung oder einem Kleber bestehen kann, um die Füllung aufzunehmen, bzw. zu halten.

Alternativ zu solchen Füllungen können zudem weitere Bauteile mit Eigenschaften oder Funktionen in bzw. an einem Ausschnitt angeordnet werden, wie bspw. Türen für Luken, Durchreichen, Tierklappen oder ähnliche Bauteile. Gemäß einer weiteren bevorzugten Ausführungsform wird daher der Ausschnitt nach der Anordnung eines Rahmens mit einer Tür versehen.

Abhängig von den Dimensionen der Bearbeitung, sowie von der Anzahl verschiedener Bearbeitungen in einem Bearbeitungsbereich kann es zum Erreichen der vorgenannten Vorteile insbesondere hinsichtlich der erhöhten Stabilität notwendig sein, mehrere Röhren jeweils abschnittsweise auszuschäumen, die durch eine oder mehrere Röhren voneinander beabstandet sind, die zwischen den auszuschäumenden Röhren angeordnet sind. Dies gilt insbesondere, wenn die auszuschäumenden Röhren an gegenüberliegenden Randbereichen eines größeren, mehrere Röhren überspannenden Bearbeitungsbereich angeordnet sind. Gemäß einer weiteren bevorzugten Ausführungsform wird daher der schaumbildende Werkstoff in eine Mehrzahl an Röhren jeweils abschnittsweise eingebracht, wobei diese Röhren nicht benachbart sein müssen. Das Einbringen kann bei atmosphärischem Druck erfolgen. Bevorzugt erfolgt es jedoch bei einem Druck zwischen 3 bar und 15 bar. Unter erhöhtem Druck wird eine Röhre gleichmäßig ausgeschäumt und die Schaumbildung ist ebenfalls gleichmäßig.

Die Dicke einer Röhrenspanplatte der hier in Rede stehenden Art ist besonders bevorzugt um ein Vielfaches kleiner als die entsprechende Breite oder gar Länge der Röhrenspanplatte. Dies wird insbesondere am Beispiel einer daraus herzustellenden Tür oder eines Wandelements deutlich. Es ist zumeist von einer Vielzahl an Röhren pro Röhrenspanplatte über die Breite auszugehen, wobei diese in der Regel parallel zur Längsachse der Röhrenspanplatte ausgerichtet sind. Der Durchmesser der Röhren ist naturgemäß limitiert durch die Dicke der Röhrenspanplatte sowie die dünnen Wandabschnitte, die jeweils eine Röhre zur Ober- bzw. Unterseite einer Röhrenspanplatte abschließen. Wie bereits vorangehend dargelegt, kann es entsprechend der Größe des Bearbeitungsbereichs und insbesondere im Rahmen der Anordnung eines Ausschnitts in der Röhrenspanplatte schließlich dazu kommen, dass in Folge der Bearbeitung mehrere Röhren in verschiedenen Winkeln geschnitten werden. In Bezug auf die vorgenannte, abschnittsweise mit schaumbildendem Werkstoff ausgeschäumte Mehrzahl an Röhren, wird daher gemäß einer weiteren bevorzugten Ausführungsform durch das Erzeugen eines Ausschnitts die Mehrzahl an Röhren im Bereich der mit schaumbildendem Werkstoff ausgefüllten Röhrenabschnitte geschnitten.

Die Offenbarung betrifft weiter eine Vorrichtung, die dazu verwendet wird, eine Röhre einer Röhrenspanplatte mindestens abschnittsweise auszuschäumen. Diese Vorrichtung umfasst mindestens einen Behälter zur Aufnahme des schaumbildenden Werkstoffs bzw. einen Behälterje Komponente des aufschäumbaren Werkstoffs. Die Vorrichtung umfasst weiter eine Misch- und Dosieranlage, aufweisend eine Dosiervorrichtung, z. B. eine oder mehrere Durchflussmesser und einen Mischkopf. Der bzw. die Behälter und die Bestandteile der Misch- und Dosieranlage sind durch Leitungen verbunden, in denen der Werkstoff gefördert wird. Das Fördern des Werkstoffs erfolgt durch mindestens eine Pumpe. Der schaumbildende Werkstoff wird, wenn er aus zwei oder mehr Komponenten besteht, von je einem Behälter für jede einzelne Komponente in einer Leitung bis zum Mischkopf gefördert, wobei die Menge der Komponente durch eine Dosiervorrichtung vorgegeben ist. Im Mischkopf werden die zwei oder mehr Komponenten gemischt und die gemischten Komponenten werden in einer Leitung bis zu einer Lanze gefördert. Die Lanze, die ebenfalls Bestandteil der Vorrichtung ist, ist in einer einfachen Ausführung das freie Auslassende der Leitung. Bevorzugt ist die Lanze jedoch an ihrem Einlassende mit der Leitung verbunden. Das Auslassende der Lanze befindet sich während des Ausschäumens in der Regel in der auszuschäumenden Röhre, insbesondere in einem Bearbeitungsbereich der Röhrenspanplatte. Die Lanze ist ausreichend starr, um problemlos in die auszuschäumende Röhre ein- und ausgeführt zu werden. Die Vorrichtung wird meist um eine Steuereinheit ergänzt, die zum einen die Misch- und Dosieranlage steuert, indem sie die abzugebende Menge des schaumbildenden Werkstoffs bzw. dessen einzelnen Komponenten vorgibt. Zum anderen umfasst die Steuereinheit optional auch die Steuerung der Lanze, z. B. durch einen Roboter. Die Steuereinheit gibt insbesondere die Eindringtiefe in die auszuschäumende Röhre und die Geschwindigkeit der Lanze in der auszuschäumenden Röhre beim Ausschäumen vor. Optional steuert die Steuereinheit auch den Druck, unter dem das aufschäumende Material in die auszuschäumende Röhre eingebracht wird. Das Ausschäumen kann bei atmosphärischem Druck erfolgen. Bevorzugt sind Behälter, Mischkopf und Lanze so ausgelegt, dass die Steuereinheit das Ausschäumen bei einem Druck von 3 bar bis 15 bar bewirken kann.

Die Erfindung betrifft zudem eine Röhrenspanplatte nach Anspruch 9, wobei Definitionen und Erklärungen zu Begrifflichkeiten des voranstehenden erfindungsgemäßen Verfahrens auch hier Anwendung finden.

Die Röhrenspanplatte weist erfindungsgemäß einen von Röhren durchsetzten Plattenkörper mit Oberflächen, nämlich einer Ober- und einer Unterseite auf, wobei eine oder mehrere Röhren in zumindest einem Bearbeitungsbereich abschnittsweise mit einem schaumbildenden Werkstoff ausgeschäumt sind, und wobei die Bearbeitungsbereiche jeweils auf zumindest einer Oberfläche einen Ausschnitt und/oder eine Topologie, insbesondere ein dekoratives Profil aufweisen. Im Rahmen der Erfindung ist es denkbar, dass in einem Bearbeitungsbereich sowohl ein Ausschnitt, als auch eine oder mehrere Topologien angeordnet sind, z. B. angrenzend an den Ausschnitt. Ebenso ist es möglich, dass zwei oder mehr voneinander unabhängige Ausschnitte in einem Bearbeitungsbereich angeordnet sind, die ggf. zudem durch eine Topologie ergänzt sind.

Gemäß einer bevorzugten Weiterbildung ist zudem in denjenigen Bearbeitungsbereichen, welche einen Ausschnitt aufweisen, jeweils in dessen Randbereich ein Rahmen angeordnet, der die angeschnittenen, ausgeschäumten Röhren zumindest abschnittsweise überdeckt. Der Rahmen kann aus Leisten hergestellt werden, er kann aber auch aus einer Materialschicht, einem Band oder einer Folie bestehen, die die durchtrennten Abschnitte der Röhrenspanplatte abdeckt. In einem Ausschnitt ist optional, wie vorstehend in Verbindung mit dem Verfahren beschrieben, eine Füllung angeordnet, die ggf. von dem Rahmen eingerahmt bzw. fixiert ist.

Gemäß einer weiteren bevorzugten Ausführungsform ist vorgesehen, dass eine Tür in einen Ausschnitt eingesetzt ist. Es ist möglich, diese Tür auf den Anwendungsbereich hin anzupassen, so dass es bspw. im medizinischen Bereich als beidseitig zugängliche Schleuse für den Austausch von Gegenständen mit einem Reinraum oder ähnlichen ausgebildet ist. In simpleren Fällen die Tür auch als ein Schlitz mit einer Klappe für einen Briefeinwurf ausgebildet werden. Auch die Möglichkeit, die Tür als Hunde- oder Katzenklappe auszubilden wurde bereits vorangehend erwähnt. In allen derartigen Fällen kann es entsprechend vorteilhaft sein, wenn die Tür randseitig an möglichst stabilen und festen Abschnitten der Röhrenspanplatte angeordnet und befestigt ist. Gerade hier zeigt sich, dass das mindestens abschnittsweise Ausschäumen von Röhrenspanplatten, gerade im Randbereich eines Bearbeitungsbereich, deutliche Vorteile mit sich bringt.

Um diese Vorteile zu ermöglichen ist es gemäß einer weiteren bevorzugten Ausführungsform weiter vorgesehen, dass der schaumbildende Werkstoff zumindest 20 *%, bevorzugt* 25 % der Dichte des Plattenkörpers aufweist. Der schaumbildende Werkstoff füllt eine leere Röhre aus und bietet damit z. B. die Möglichkeit, dass ein in dem Bereich dieser Röhre anzuordnender Rahmen der vorgenannten Art an dem schaumbildenden Werkstoff verankert werden kann. Als schaumbildender Werkstoff werden oft 2-Komponenten-Werkstoffe eingesetzt, bei denen die beiden Komponenten unmittelbar nach dem Mischen unter Freisetzung von Gas miteinander reagieren, wodurch ein Schaum entsteht, der eine Röhre einer Röhrenspanplatte ausschäumt. Ein typischer Werkstoff könnte aus einer Kombination von Isocyanat und Polyol bestehen, die in einem Mengenverhältnis von 1:1 bis 1:2, bevorzugt von 1:1,5 eingesetzt werden.

Insbesondere hinsichtlich der Erzeugung einer Topologie kann neben der Dichte des schaumbildenden Werkstoffs die Festigkeit ein wichtiger Faktor sein. Hier soll bspw. im Falle eines wie vorgenannt dünnwandigen Wandabschnitts, der über einer Röhre ausgebildet ist, der schaumbildende Werkstoff stützend wirken. Physikalisch ist bekannt, dass Dichte und Festigkeit nicht zwingend miteinander einhergehen. Gemäß einer weiteren bevorzugten Ausführungsform liegt die Festigkeit im Bereich der ausgeschäumten Röhre über der Festigkeit der nicht-ausgeschäumten Röhre. So steigt die Biegefestigkeit im Vergleich zur nicht-ausgeschäumten Röhre parallel zur Richtung der Röhre um mindestens den Faktor 2, bevorzugt um mindestens den Faktor 3. Die Zugfestigkeit steigt nach dem Ausschäumen mindestens um den Faktor 4, vorteilhaft um mindestens den Faktor 5, bezogen auf die nicht-ausgeschäumte Röhre. Die mechanischen Eigenschaften wurden jeweils gemäß DIN 14775 gemessen.

Details der Erfindung werden nachstehend an Hand eines Ausführungsbeispiels mit Bezug auf die Figuren erläutert. Die Figuren zeigen:
- Fig. 1: eine perspektivische Ansicht einer Röhrenspanplatte mit einem definierten Bearbeitungsbereich gemäß einer Ausführungsform;
- Fig. 2a: eine perspektivische Ansicht der Röhrenspanplatte aus Fig. 1 mit einem Ausschnitt im Bearbeitungsbereich;
- Fig. 2b: eine perspektivische Ansicht einer erfindungsgemäßen Röhrenspanplatte mit einem Ausschnitt und abschnittsweise ausgeschäumten Röhren;
- Fig. 3a: eine Normalansicht entlang einer Längsachse auf einen Teil einer Röhrenspanplatte vor einer Bearbeitung;
- Fig. 3b: die Röhrenspanplatte aus Fig. 3a nach der Bearbeitung.

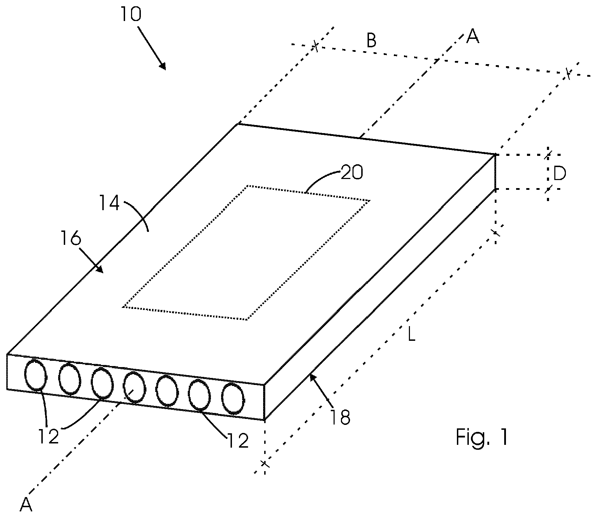

Fig. 1 zeigt beispielhaft eine Röhrenspanplatte 10 mit einem von Röhren 12 durchsetzten Plattenkörper 14. Der Plattenkörper 14 besteht aus mit Bindemitteln vermischten Spänen, welche in einem Strangpressverfahren unter Druck und Wärme verpresst und auf die vorgegebene Länge abgelängt wurden. Die Breite der Röhrenspanplatte 10 wird durch das Herstellungsverfahren vorgegeben. Die Röhrenspanplatte 10 weist hier nun beispielhaft eine Länge L, eine Dicke D und eine Breite B auf. Die Röhren 12 erstrecken sich entlang der Länge L und damit parallel zu einer Längsachse A des Plattenkörpers 14. Der Plattenkörper 14 weist eine Oberseite 16 und eine Unterseite 18 auf, wobei auf der Oberseite 16 ein Bearbeitungsbereich 20 definiert wurde.

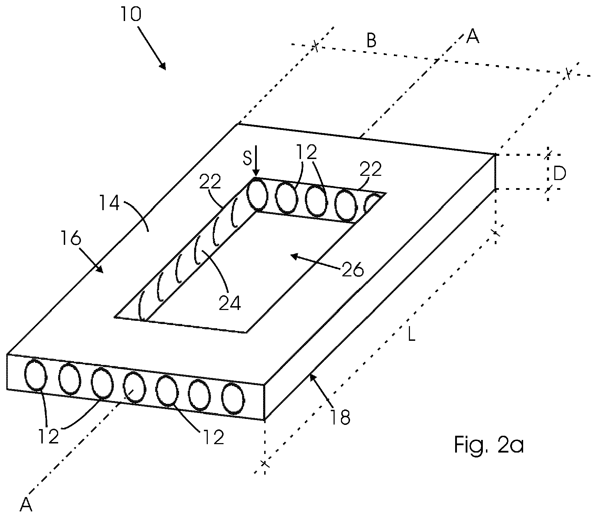

Fig. 2a illustriert die Ausgestaltung der Röhrenspanplatte 10 gemäß Fig. 1 nach der Bearbeitung, hier der Erzeugung eines Ausschnitts 26. Der Ausschnitt 26 erstreckt sich in einer Schnittrichtung S, welche hier senkrecht zur Oberseite 16 ausgerichtet ist, und durchdringt die Röhrenspanplatte 10 vollständig, also sowohl die Oberseite 16 als auch die Unterseite 18. Der Ausschnitt 26 durchschneidet eine Mehrzahl von Röhren 12 sowohl in Richtung der Längsachse A als auch quer dazu. Der Ausschnitt 26 weist entsprechend einen Randbereich 22, in welchem sowohl der Plattenkörper 14 als auch die Röhren 12 entweder in Richtung der Längsachse oder quer dazu geschnitten sind. Fig. 2a illustriert dabei insbesondere, dass in denjenigen Abschnitten des Randbereichs 22, in welchen die Röhren parallel zur Längsachse A geschnitten werden, eine konkave Ausnehmung 24 zurückbleibt. Diejenigen Röhren 12, welche quer zur Längsachse A von dem Ausschnitt 26 geschnitten werden, weisen hingegen im Wesentlichen dieselbe Beschaffenheit auf, wie es die Röhren 12 auch an den freien Längsenden der Röhrenspanplatten 10 tun.

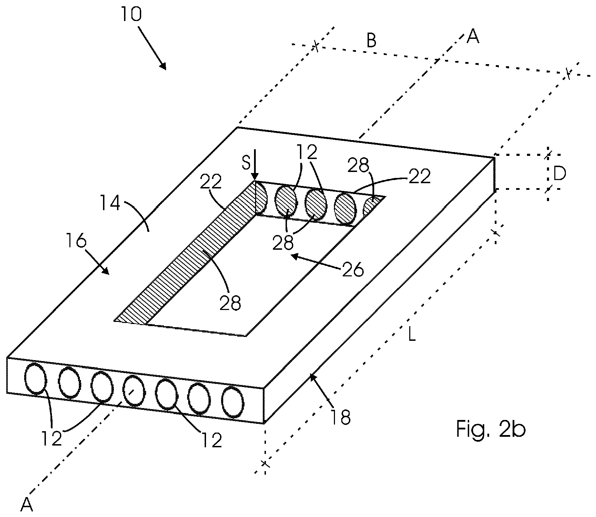

Fig. 2b zeigt eine Röhrenspanplatte 10, wie sie beispielhaft in Fig. 2a illustriert wurde, bei der insbesondere durch abschnittsweise Ausschäumungen 28 die Nachteile der vorgenannten Ausnehmung 24 erfindungsgemäß verbessert wurden. Die vormalige Ausnehmung 24 weist nunmehr, wie es Fig. 2b zeigt, dank der Ausschäumung 28 eine im Wesentlichen flächige Schnittfläche parallel zur Längsachse A auf. Ebenso sind diejenigen Röhren 12 welche von dem Ausschnitt 26 quer zur Längsachse geschnitten werden im entsprechenden Randbereich 22 nicht mehr offen, sondern ebenfalls mit einer Ausschäumung 28 versehen. Die Ausschäumung 28 wurde dort jeweils bereits vor der Bearbeitung mit dem Ausschnitt 26 angeordnet und zwar bereits, als der entsprechende Bearbeitungsbereich definiert wurde. Wie vorangehend beschrieben genügt eine gedankliche Definition, eine sicht- oder fühlbare Markierung gemäß Fig. 1 ist nicht zwingend erforderlich.

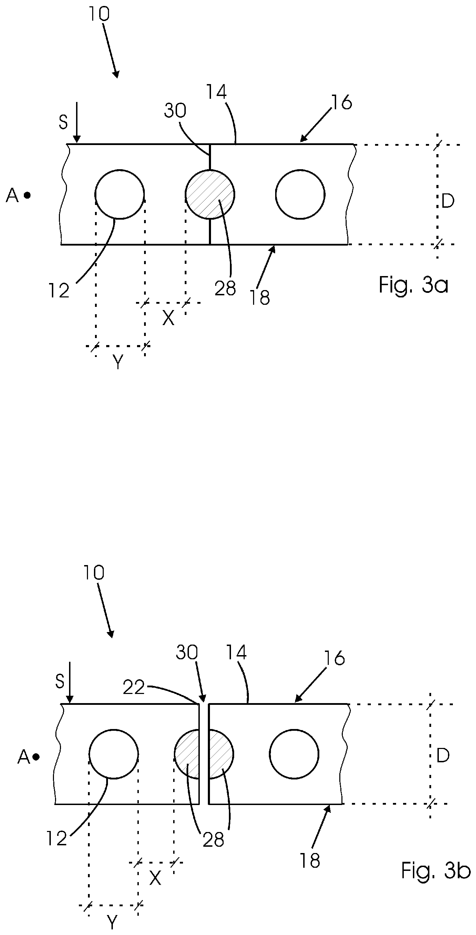

Fig. 3a zeigt beispielhaft einen Anteil einer Röhrenspanplatte 10 mit drei voneinander in einem Abstand X angeordneten Röhren 12 mit je einem Röhrendurchmesser Y. Es wird deutlich, dass lediglich diejenige Röhre 12, welche im Bereich eines Schnittansatzes 30 angeordnet, bzw. von diesem geschnitten wird, eine Ausschäumung 28 aufweist. Ist eine Röhre 12 ausreichend von dem zukünftigen Randbereich 22 (Fig. 3b) beabstandet, muss diese auch nicht mit einer Ausschäumung 28 versehen werden.

Das erfindungsgemäße Verfahren wird in einer einfachen Ausführung in der Weise durchgeführt, dass ein schaumbildender Werkstoff, z. B. eine Mischung aus einem Isocyanat und einem Polyol in einem Verhältnis von 1:1,5, bevorzugt bei Temperaturen zwischen 10 °C und 40 °C, in eine Röhre 12 einer Röhrenspanplatte 10 eingeführt wird, z. B. mittels einer Lanze, die bis an oder in den Bearbeitungsbereich 20 in die Röhre 12 hineinragt, die ausgeschäumt werden soll. Die Lanze steht an ihrem Einlassende über eine Fluidleitung in Verbindung mit einer Misch- und Dosieranlage, in der die vorgenannte zwei-Komponenten-Mischung aus Isocyanat und Polyol vorzugsweise mittels Durchflussmessern abgemessen und für den sofortigen Einsatz in einem Mischkopf gemischt wird. Die Misch- und Dosieranlage ist typisch mit einem Behälter mit Rührwerk für jede der Komponenten des schaumbildenden Werkstoffs, mit Pumpen, Durchflussmessern und einem Mischkopf ausgestattet sowie mit Leitungen, die die einzelnen Bestandteile der Misch- und Dosieranlage miteinander verbinden. Aus den Behältern wird der Werkstoff bzw. dessen Komponenten nach Maßgabe der jeweiligen Durchflussmesser mittels einer oder mehrerer Pumpen durch den Mischkopf bis zum Auslassende der Lanze gefördert. In dieser einfachen Ausführung kann die Lanze von Hand geführt werden. Die Länge der Lanze beträgt ca. 2 m bis 3 m. Eine typische Misch- und Dosieranlage gibt ca. 20 g/Sekunde bis 100 g/Sekunde an schaumbildendem Werkstoff ab. Um diese Abgabemenge kontinuierlich zu erzeugen, werden bei einem zwei-Komponenten-Werkstoff zwei Behälter von jeweils ca. 200 l Inhalt benötigt, um je eine Komponente des Werkstoffs zu bevorraten. Eine gleichmäßige Abgabe der jeweiligen Komponente in gleichbleibender Qualität wird durch das Rührwerk gewährleistet. Der schaumbildende Werkstoff wird unmittelbar nach dem Mischen der beiden Komponenten im Mischkopf in die auszuschäumende Röhre 12 eingebracht und schäumt dort nach dem Verlassen der Lanze auf, wodurch die Röhre 12 mindestens abschnittsweise mit Schaum ausgefüllt wird. Der schaumbildende Werkstoff tritt dabei unter Hochdruck aus dem Auslassende der Lanze aus. Unter Hochdruck werden hier Auslassdrücke zwischen 3 bar und 15 bar verstanden. Entsprechend gering ist bei dem vorstehenden Hochdruckverfahren die Verweilzeit des schaumbildenden Werkstoffs in der Lanze vor dem Einbringen in eine Röhre 12. Dies hat insbesondere den Vorteil, dass bei der Verwendung eines mehrkomponentigen schaumbildenden Werkstoffs die Vorrichtung längere Einsatzzeiten aufweist wegen eines geringeren Reinigungs- und Wartungsbedarfs. Da erst die Mischung der entsprechenden Komponenten, also der Werkstoff, chemisch schnell reaktiv ist, ist nach einem Produktionsstillstand in den meisten Fällen nur die Lanze zu reinigen. In einer alternativen Ausführung, insbesondere bei solchen Verfahrensweisen bei denen ein langsamer reagierender Werkstoff verwendet wird, ist es auch denkbar, dass der Werkstoff dann entsprechend mit geringerem Druck, also mit Niederdruck aus der Lanze in eine Röhre 12 einer Röhrenspanplatte 10 eingebracht wird.

Bei längeren Röhren 12, z. B. für Türen oder Wandelemente, erfolgt das Ausschäumen bevorzugt in zwei Schritten. In einem ersten Schritt wird die Lanze von einem ersten Ende der Röhre 12 her eingeführt und die Röhre 12 wird mindestens abschnittsweise von der Mitte bis zum ersten Ende der Röhre 12 her ausgeschäumt. In einem zweiten Schritt wird dann die Lanze vom entgegengesetzten zweiten Ende der Röhre 12 her eingeführt und das mindestens abschnittsweise Ausschäumen der Röhre 12 erfolgt zwischen der Mitte der Röhrenspanplatte 10 und dem zweiten Ende. Der schaumbildende Werkstoff liegt, insbesondere wenn ein Hochdruckverfahren eingesetzt wird, bis zum Austreten aus der Lanze meist flüssig vor und schäumt nach dem Austreten aus der Lanze auf. Bevorzugt wird ein Schaum mit einer Porengröße von 150 µm bis 300 µm erzeugt. Das Ausfüllen der Röhre 12 mit Schaum ist meist in ca. 15 Minuten abgeschlossen.

Nach einer vorteilhaften Ausführung des Verfahrens werden mehrere Röhrenspanplatten 10 gleichzeitig bearbeitet. Dabei können zwei oder mehr Lanzen gleichzeitig eingesetzt werden. Bevorzugt wird eine Steuereinheit eingesetzt, die einzelne Lanzen oder Gruppen von Lanzen steuert, um auch bei gleichzeitigem Ausschäumen mehrerer Röhrenspanplatten 10 bzw. mehrerer Röhren 12 in einer oder mehreren Röhrenspanplatten 10 jede Röhre 12 nach der Vorgabe der Steuereinheit individuell mindestens abschnittsweise ausschäumen zu können. Die Steuereinheit kann dabei bevorzugt die Eindringtiefe der Lanze in die Röhre und ggf. auch die in die Röhre 12 eingebrachte Menge an ausschäumendem Werkstoff steuern bzw. regeln. Unter einer Steuereinheit wird auch ein Roboter verstanden, der die Lanze handhabt.

Nach einer weiter vorteilhaften Ausführung des Verfahrens kann ein Förderband oder ein Drehteller eingesetzt werden, um eine oder mehrere Röhren 12 einer Röhrenspanplatte 10 mindestens abschnittsweise auszuschäumen. Insbesondere wenn Roboter zum Führen der Lanze eingesetzt werden, erweist es sich als vorteilhaft, ein Förderband oder einen Drehteller einzusetzen, um die Röhrenspanplatten 10, bei denen mindestens eine Röhre 12 mindestens abschnittsweise ausgeschäumt werden soll, zügig bearbeiten zu können. Insbesondere hat sich ein Förderband oder Drehteller bewährt, auf dem ein Stapel von aufeinander geschichteten Röhrenspanplatten 10 geschichtet ist. Eine oder mehrere Röhren 12 der geschichteten Röhrenspanplatten 10 können von einer Lanze oder von einer Gruppe von Lanzen nacheinander oder gleichzeitig mindestens abschnittsweise ausgeschäumt werden.

Nach einer weiter bevorzugten Ausführung des Verfahrens sind Förderband oder Drehteller so ausgelegt, dass sie gekippt oder geneigt werden können, vorzugsweise in einem Winkel von bis zu 10°, bevorzugt bis zu 5°, ausgehend von der Waagerechten. Ist eine Röhrenspanplatte 10 während des Einbringens von aufschäumendem Werkstoff geneigt, so kann das Verteilen des Werkstoffs in der jeweils auszuschäumenden Röhre 12 optimiert werden. Beispielsweise kann die Lanze kürzer ausgelegt werden, weil das Verteilen bzw. Verfließen des Werkstoffs genutzt werden kann, um weit in der Röhrenspanplatte 10 liegende Abschnitte der Röhre 12 auszuschäumen. Damit kann die kürzere Lanze schneller in die Röhre 12 eingeführt und wieder herausgezogen werden, was zu einer schnelleren Bearbeitung führt.

Optional kann das Förderband bzw. der Drehteller mit einer Folien-Wickelvorrichtung für die Röhrenspanplatten 10 mit mindestens teilweise ausgeschäumten Röhren 12 ausgestattet sein. Werden die Röhrenspanplatten 10 nach dem Ausschäumen, jedoch vor dem Bearbeiten transportiert, sind die Röhrenspanplatten 10 so für den Transport geschützt. Für den Fall, dass die Röhre(n) 12 bis an den Rand der Röhrenspanplatte 10 ausgeschäumt werden, vermeidet ein Umwickeln mit Folie, dass Schaum aus einer Röhre 12 austritt. Eine Verschmutzung der Stirnseiten und ein Verkleben der Platten 10 miteinander durch etwa austretenden Schaum wird so wirksam vermieden.

Nach einer weiter vorteilhaften Ausführung kann eine Misch- bzw. Dosieranlage mit der bzw. den zugehörigen Lanzen und einer Steuereinheit auch mit zwei Förderbändern bzw. Drehtellern angeordnet werden, da die Zeit für das Ausrichten eines neuen Stapels und ggf. das Umwickeln des bearbeiteten Stapels mit Folie dann genutzt werden kann, um einen auf einem zweiten Förderband oder Drehteller angeordneten Stapel von Röhrenspanplatten 10 zu bearbeiten.

Ergänzend wurden Festigkeitseigenschaften einer nicht-ausgeschäumten Röhre 12 (vorher) und einer ausgeschäumten Röhre 12 (nachher) bestimmt. Folgende Werte wurden gemäß EN 14755 ermittelt: vor dem Ausschäumen beträgt die Biegefestigkeit im Bereich der Röhre 12 parallel zur Röhre 12 1,48 N/mm², nach dem Ausschäumen 4,07 N/mm². Vor dem Ausschäumen beträgt die Zugfestigkeit im Bereich der Röhre 12 0,46 N/mm², nach dem Ausschäumen beträgt die Zugfestigkeit im Bereich der Röhre 12 2,27 N/mm². Durch das Ausschäumen der Röhre 12 erhöht sich die Dichte der Röhrenspanplatte 10 von im Mittel 259 kg/m³ auf 334 kg/m³.

### Bezugszeichenliste

- 10: Röhrenspanplatte
- 12: Röhre
- 14: Plattenkörper
- 16: Oberseite
- 18: Unterseite
- 20: Bearbeitungsbereich
- 22: Randbereich
- 24: Ausnehmung
- 26: Ausschnitt
- 28: Ausschäumung
- 30: Schnittansatz
- A: Längsachse
- B: Breite
- D: Dicke
- L: Länge
- S: Schnittrichtung
- X: Abstand d. Röhren
- Y: Röhrendurchmesser

## Patentansprüche

1. Verfahren zum Ausschäumen von Röhrenspanplatten (10) aufweisend einen von Röhren (12) durchsetzten Plattenkörper (14) mit Oberflächen, nämlich einer Ober- und einer Unterseite (16, 18), mit den Schritten
- Bereitstellen einer Röhrenspanplatte (10),
- Definieren eines oder mehrerer Bearbeitungsbereiche (20) auf der Ober- und/oder Unterseite (16, 18) der Röhrenspanplatte (10),
- Ausschäumen mindestens einer der vorgenannten Röhren (12) im Bearbeitungsbereich (20) zur lokalen Reduzierung des Dichteunterschieds zwischen Röhren (12) und Plattenkörper (14) mittels Einbringen eines schaumbildenden Werkstoffs in die entsprechenden Röhren (12),
- Bearbeiten der Bearbeitungsbereiche (20).

2. Verfahren nach Anspruch 1, **dadurch gekennzeichnet, dass** der schaumbildende Werkstoff mindestens im Randbereich (22) des Bearbeitungsbereichs (20) in entsprechende Röhren (12) eingebracht wird.

3. Verfahren nach einem der vorangehenden Ansprüche, **dadurch gekennzeichnet, dass** in zumindest einem Bearbeitungsbereich (20) im Zuge des Bearbeitens eine Topologie, insbesondere ein dekoratives Muster, erzeugt wird.

4. Verfahren nach einem der vorangehenden Ansprüche, **dadurch gekennzeichnet, dass** in zumindest einem Bearbeitungsbereich (20) ein Ausschnitt (26) erzeugt wird, welcher Ober- und Unterseite (16, 18) des Plattenkörpers (14) durchstößt.

5. Verfahren nach Anspruch 4, **dadurch gekennzeichnet, dass** im Randbereich (22) der Ausschnitte (26) ein Rahmen angeordnet wird.

6. Verfahren nach Anspruch 5, **dadurch gekennzeichnet, dass** der Ausschnitt (26) nach der Anordnung eines Rahmens mit einer Füllung ausgefüllt wird.

7. Verfahren nach einem der vorangehenden Ansprüche, **dadurch gekennzeichnet, dass** der schaumbildende Werkstoff in eine Mehrzahl an Röhren (12) jeweils abschnittsweise eingebracht wird.

8. Verfahren nach einem der Ansprüche 7, **dadurch gekennzeichnet, dass** durch das Erzeugen eines Ausschnitts (26) die Mehrzahl an Röhren (12) im Bereich der mit schaumbildendem Werkstoff ausgefüllten Abschnitte (26) geschnitten werden.

9. Röhrenspanplatte, aufweisend
- einen von Röhren (12) durchsetzten Plattenkörper (14) mit Oberflächen, nämlich einer Ober- und einer Unterseite (16, 18), wobei
- eine oder mehrere Röhren (12) in zumindest einem Bearbeitungsbereich (20) abschnittsweise mit einem schaumbildenden Werkstoff ausgeschäumt sind. wobei die Dichte der Röhrenspannplatte durch das Einbringen von Schaum um 15 Gew.-% bis 35 Gew.-% bezogen auf die Röhrenspanplatte ohne Schaum gesteigert wird und wobei
- die Bearbeitungsbereiche (20) jeweils auf zumindest einer der Oberflächen einen Ausschnitt (26) und/oder eine Topologie aufweisen.

10. Röhrenspanplatte nach Anspruch 9, **dadurch gekennzeichnet, dass**
- in denjenigen Bearbeitungsbereichen (20), welche einen Ausschnitt aufweisen, jeweils in dessen Randbereich (22) ein Rahmen angeordnet ist, und
- in den Ausschnitten (26), von dem Rahmen eingerahmt, eine Füllung angeordnet ist, wobei
- der Rahmen zumindest abschnittsweise in Kontakt mit ausgeschäumten Anteilen der Röhren (12) steht.

11. Röhrenspanplatte nach einem der Ansprüche 9-10, **dadurch gekennzeichnet, dass** die Ausschnitte (26) die Röhrenspanplatte (10) vollständig durchdringen.

12. Röhrenspanplatte nach einem der Ansprüche 9-11, **dadurch gekennzeichnet, dass** zumindest eine Füllung als Verschlusselement ausgebildet ist.

13. Röhrenspanplatte nach einem der Ansprüche 9-12, **dadurch gekennzeichnet, dass** die Biegefestigkeit der durch den schaumbildenden Werkstoff ausgefüllten Röhre (12) parallel zur Richtung der Röhre mindestens um den Faktor 2 über der Biegefestigkeit der nicht-ausgeschäumten Röhre liegt.

14. Röhrenspanplatte nach einem der Ansprüche 9-12, **dadurch gekennzeichnet, dass** die Zugfestigkeit der durch den schaumbildenden Werkstoff ausgefüllten Röhre (12) mindestens um den Faktor 4 über der Zugfestigkeit der nicht-ausgeschäumten Röhre liegt.

## Claims

1. A method for foaming chipboards penetrated with tubes (10) comprising a board body (14) interspersed by tubes (12) and having surfaces, namely an upper and a lower face (16, 18), said method comprising the steps of
- providing a chipboard penetrated with tubes (10),
- defining one or more machining regions (20) on the upper and/or lower face (16, 18) of the chipboard penetrated with tubes (10),
- foaming at least one of the aforementioned tubes (12) in the machining region (20) to locally reduce the difference in density between the tubes (12) and the board body (14) by introducing a foam-forming material into at least one of the above-mentioned tubes (12),
- machining the machining regions (20).

2. The method according to claim 1, **characterized in that** the foam-forming material is introduced into corresponding tubes (12) at least in the edge region (22) of the machining region (20).

3. The method according to any one of the preceding claims, **characterized in that** a topology, in particular a decorative pattern, is created in at least one machining region (20) during the machining.

4. The method according to any one of the preceding claims, **characterized in that** a cutout (26) which penetrates the upper and lower face (16, 18) of the board body (14) is produced in at least one machining region (20).

5. The method according to claim 4, **characterized in that** a frame is arranged in the edge region (22) of the cutouts (26).

6. The method according to claim 5, **characterized in that** the cutout (26) is filled with an infill after the arrangement of a frame.

7. The method according to any one of the preceding claims, **characterized in that** the foam-forming material is introduced into a plurality of tubes (12) in each case in sections.

8. The method according to any one of claims 7, **characterized in that**, on account of the creation of a cutout (26), the plurality of tubes (12) are cut in the region of the sections that are filled with foam-forming material.

9. A chipboard penetrated with tubes, comprising
- a board body (14) interspersed by tubes (12) and having surfaces, namely an upper and a lower face (16, 18), wherein
- one or more tubes (12) are foamed in portions with a foam-forming material in at least one machining region (20), wherein the density of the tubular particleboard is increased as a result of introducing foam by 15% to 35% by weight relative to the tubular particleboard without foam, and wherein
- the machining regions (20) each have a cutout (26) and/or a topology, on at least one surface.

10. The chipboard penetrated with tubes according to claim 9, **characterized in that**
- in the machining regions (20), which have a cutout, a frame is arranged in the edge area (22), and
- an infill is arranged in the cutouts (26) framed by the frame, wherein
- the frame is in contact, at least in portions, with foamed portions of the tubes (12).

11. The chipboard penetrated with tubes according to any one of claims 9 to 10, **characterized in that** the cutouts (26) penetrate the chipboard penetrated with tubes (10) completely.

12. The chipboard penetrated with tubes according to any one of claims 9 to 11, **characterized in that** at least one infill is designed as a closure element.

13. The chipboard penetrated with tubes according to any one of claims 9 to 12, **characterized in that** the flexural strength of the tube (12) filled with the foam-forming material is greater than the flexural strength of the non-foamed tube at least by a factor of 2 parallel to the direction of the tube.

14. The chipboard penetrated with tubes according to any one of claims 9 to 12, **characterized in that** the tensile strength of the tube (12) filled with the foam-forming material is greater than the tensile strength of the non-foamed tube at least by a factor of 4.

## Revendications

1. Méthode pour le moussage de panneaux d'aggloméré pénétré par des tubess (10) comprenant un corps de panneau (14) traversé par des tubes (12) et présentant des surfaces, à savoir une face supérieure et une face inférieure (16, 18), comprenant les étapes suivantes
- mise à disposition d'un panneau d'aggloméré pénétré par des tubes (10),
- définir une ou plusieurs zones d'usinage (20) sur la face supérieure et/ou la face inférieure (16, 18) du panneau d'aggloméré pénétré par des tubes (10),
- le moussage d'au moins l'un des tubes (12) susmentionnés dans la zone d'usinage (20) par moussage afin de réduire localement la différence de densité entre les tubes (12) et le corps de panneau (14) au moyen de l'introduction d'un matériau moussant dans les tubes (12) correspondants,
- Usinage des zones d'usinage (20).

2. Méthode selon la revendication 1, **caractérisé en ce que** le matériau moussant est introduit dans les tubes correspondants (12) au moins dans la zone périphérique (22) de la zone d'usinage (20).

3. Méthode selon l'une des revendications précédentes, **caractérisé en ce que**, dans au moins une zone d'usinage (20), une topologie, en particulier un motif décoratif, est générée au cours de l'usinage.

4. Méthode selon l'une des revendications précédentes, **caractérisé en ce que**, dans au moins une zone d'usinage (20), une découpe (26) est réalisée, laquelle traverse les faces supérieure et inférieure (16, 18) du corps de panneau (14).

5. Méthode selon la revendication 4, **caractérisé en ce qu'**un cadre est disposé dans la zone périphérique (22) des découpes (26).

6. Méthode selon la revendication 5, **caractérisé en ce que** la découpe (26) est remplie d'un matériau de remplissage après la mise en place d'un cadre.

7. Méthode selon l'une des revendications précédentes, **caractérisé en ce que** le matériau moussant est introduit par sections dans une pluralité de tubes (12).

8. Méthode selon l'une des revendications 7, **caractérisé en ce que**, par la réalisation d'une découpe (26), la pluralité de tubes (12) est sectionnée dans la zone des sections (26) remplies de matériau moussant.

9. Panneau d'aggloméré pénétré par des tubes, comprenant
- un corps de panneau (14) traversé par des tubes (12) et présentant des surfaces, à savoir une face supérieure et une face inférieure (16, 18), dans lequel
- un ou plusieurs tubes (12) sont partiellement remplis d'un matériau moussant dans au moins une zone d'usinage (20), la densité du panneau d'aggloméré pénétré par des tubes étant augmentée grâce à l'introduction de mousse de 15 % à 35 % en poids par rapport au panneau d'aggloméré pénétré par des tubes sans mousse, et
- les zones d'usinage (20) présentent chacune, sur au moins l'une des surfaces, une découpe (26) et/ou une topologie.

10. Panneau d'aggloméré pénétré par des tubes selon la revendication 9, **caractérisé en ce que**
- dans les zones d'usinage (20) qui comportent une découpe, un cadre est disposé respectivement dans la zone périphérique (22) de celle-ci, et
- dans les découpes (26), encadrées par le cadre, un remplissage est disposé,
- le cadre est au moins partiellement en contact avec des parties remplies de mousse des tubes (12).

11. Panneau d'aggloméré pénétré par des tubes selon l'une des revendications 9 à 10, **caractérisé en ce que** les découpes (26) traversent complètement le panneau d'aggloméré pénétré par des tubes (10).

12. Panneau d'aggloméré pénétré par des tubes selon l'une des revendications 9 à 11, **caractérisé en ce qu'**au moins un remplissage est conçu comme élément de fermeture.

13. Panneau d'aggloméré pénétré par des tubes selon l'une des revendications 9 à 12, **caractérisé en ce que** la résistance à la flexion du tube (12) rempli par le matériau moussant, parallèlement à la direction du tube, est supérieure d'au moins un facteur 2 à la résistance à la flexion du tube non moussé.

14. Panneau d'aggloméré pénétré par des tubes selon l'une des revendications 9 à 12, **caractérisé en ce que** la résistance à la traction du tube (12) rempli par le matériau moussant est supérieure d'au moins un facteur 4 à la résistance à la traction du tube non moussé.
